# EUROPEAN PATENT SPECIFICATION

(11) **EP 2 584 783 B1**
(45) Date of publication and mention of the grant of the patent: **09.03.2022**
(21) Application number: 12188627.9
(22) Date of filing: 16.10.2012
(51) Int. Cl.: H04N 9/31

(54) **Projector, projection control method, and storage medium storing program**
Projektor, Projektionssteuerungsverfahren und Speichermedium mit Programm
Projecteur, procédé de contrôle de projection et support de stockage avec programme

(30) Priority: 17.10.2011 JP 2011228094
(43) Date of publication of application: 24.04.2013
(73) Proprietor: Casio Computer Co., Ltd., Tokyo 151-8543 (JP)
(72) Inventor: Oda, Kiyoshi, Hamura-shi, Tokyo 205-8555 (JP); Narikawa, Tetsuro, Hamura-shi, Tokyo 205-8555 (JP)
(74) Representative: Grünecker Patent- und Rechtsanwälte PartG mbB

(56) References cited:
- EP-A1- 2 187 381
- US-A1- 2005 280 850
- US-A1- 2006 215 128
- US-A1- 2006 268 236
- US-A1- 2010 328 554

## Description

The present invention relates to a projector, a projection control method, and a storage medium storing program, suitable for a digital light processing (DLP) (registered trademark) system.

Heretofore, in a projector of a DLP (registered trademark) system in which one micro mirror element is used, a white light from a discharge lamp as a light source is transmitted through a color wheel in which color filters are arranged along a circumference thereof, to generate, for example, a primary color light which turns red "R", green "G" and blue "B" in a time sharing manner.

Moreover, in accordance with an irradiation timing of the obtained primary color light, an image of each color component is displayed by the micro mirror element. Furthermore, the color optical image is formed by a reflected light of the element, and the formed optical image is projected toward a projection object by a projection lens to carry out the projection of the image.

The above micro mirror element is manufactured exclusively by a semiconductor maker which has developed the element also including a controller circuit chip for the element. Therefore, makers which manufacture the DLP (registered trademark) system projectors receive the supply of the micro mirror elements and the controller circuit chips for the elements from the above semiconductor maker, to manufacture the projectors.

In recent years, various projectors have been projected and manufactured, in which semiconductor light emission elements such as a semiconductor laser (LD) and a light emitting diode (LED) to output a single color light are used in combination as the light sources for the projectors, as in an invention disclosed in, for example, Jpn. Pat. Appln. KOKAI Publication No. 2011-095388. It is noted that the combination of the semiconductor light emission elements is different from the above-mentioned discharge lamp which emits the white light.

US 2010/0328554 A1 relates to a light source device, a video projector, and a projection method (used in a digital light processing video projector) to compensate for any possible uneven luminance for each primary color component. Two light sources, consisting of a RED light emitting diode and a BLUE laser diode (B-LD) are used as primary light color sources. The GREEN light is generated by excitation of a green reflective fluorescent layer (F-layer) by the light of the B-LD. The F-layer is on parts of the circumference of a color wheel, which contains a sequence of color filters, corresponding to the sequence of color images of the frame. The BLUE light is generated by use of the color wheel, which contains - in addition to the color filters - also a diffusive transmitting layer for the blue laser light. Since the light fluxes of the various light sources are inhomogeneous, all generated light fluxes for the different light of colors pass through an integrator to make their respective luminance distribution uniform. In this way, the color reproducibility becomes compatible with the brightness of the projection image.

US 2006/0215128 A1 relates to a projector and method to improve the performance of the color reproduction. A time division driver supplies color signals, corresponding to color of the lights from the color wheel, to a spatial light modulator. The lights of colors are generated based on the color wheel, which contains equally arranged

RGB primary and intermediate color filters, with the latter being placed between adjacent primary color filters. Since the intermediate color filters are arranged between the adjacent primary color filters, the projector engine is able to project mixed color lights during those time periods, in which the primary color and intermediate color are mixed, thus improving the performance of the color reproduction.

US 2005/0280850 A1 relates to a color signal processing apparatus and method to adaptively transform a color gamut of a reproduced video depending on an input video. A color signal processing apparatus calculates a target color gamut, based on color signal values of each pixel of an input video and determines the corresponding target primary colors. The calculated target primary colors are then produced by mixing primary colors in the basis of the input color gamut of the input video, and converts and outputs the color signal values of each pixel of the input video to match the calculated target color gamut. Since the input color gamut of the input video is transformed adaptively, the input video is repdiced with increased brightness and enhanced contrast.

EP 2 187 381 A1 relates to a video display device and a light source driving method for reducing the color breakup of a displayed video and to improve the image quality without increasing the refresh rate of liquid crystal panels. This is achieved by use of two driving signals, generated by a light source driving circuit, such that the first signal gradually increases within the present subframe the luminance of a color light source, corresponding to an image displayed in the present sub-frame, from zero to a predetermined value within the panel video writing period, whereas the second one gradually decreases the luminance from the predetermined value to zero within the panel video writing period of the next sub-frame. This improves the color breakup during image display even for low-response displays.

Patent Application US 2006/0268236 A1 relates to an LED-based image projection by a projector for a sequence of different colors and, in particular, to brightness adjusting light during one or more spoke periods inserted into a color cycle frame.

In not only the technology disclosed in the above patent document but also the controller circuit chip for the micro mirror element, a rotation timing of each color filter is beforehand set on the presupposition that the color wheel is present, regardless of whether or not the color wheel is actually present in the projector, whereby it is possible to control the display drive of the micro mirror element.

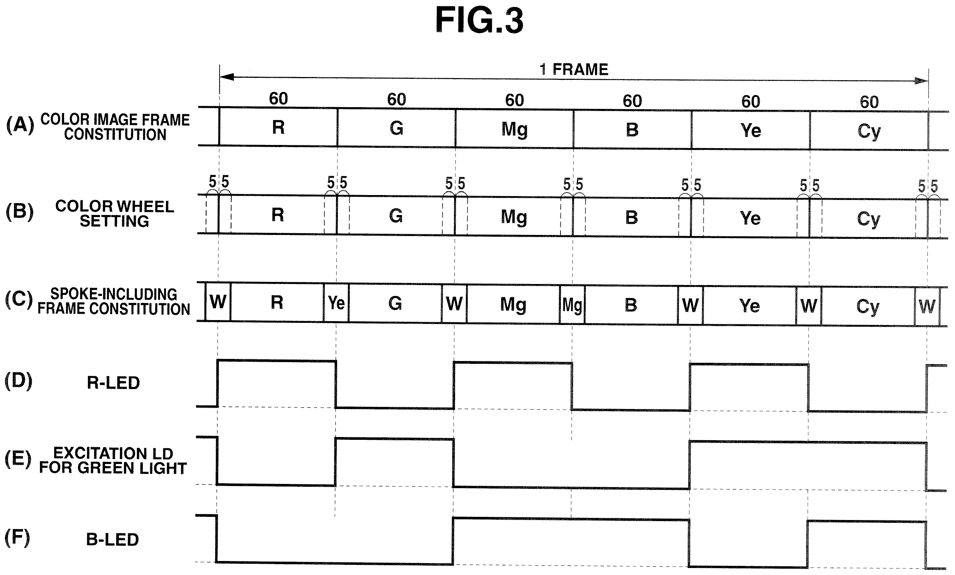

This fact will be described with reference to FIG. 3. FIG. 3 is a timing chart showing a setting constitution of a light emission timing.

In the same drawing, like contents disclosed in the above patent document, a red light is directly obtained by the light emission of an LED (hereinafter referred to as "R-LED", a green light is obtained by an LD which emits a blue light (hereinafter referred to as "G-excitation LD") and a fluorescence wheel in which a ring-like fluorescent layer irradiated with the blue light to emit the green light is formed, and the blue light is obtained directly by the light emission of an LED (hereinafter referred to as "B-LED"), respectively. Hereinafter, there will be described a case where one of primary color lights is used singly and a combination of two types of primary color lights is used as a complementary color light, and an optical image corresponding to each color component is formed and projected. According to such a constitution of the light source, the presence of the color wheel actually is not required.

As shown in (A) of FIG. 3, here, one frame of a color image is constituted of six fields in total of red "R", green "G", magenta "Mg", blue "B", yellow "Ye" and cyan "Cy".

A numeric value "60" (implying an angle of 60°) described for each field indicates that each field period is evenly divided as a center angle corresponding to a rotation angle (one cycle of 360°) of a virtual color wheel.

For the above frame constitution, the rotation timing of each color filter of the virtual color wheel is beforehand set in the controller circuit as shown in (B) of FIG. 3. In the controller circuit where the use of the color wheel is presupposed, a period in which the color filter of each color constituting the color wheel switches at a position of a transmission spot light from the light source is referred to as "spoke period", and it is necessary to set the spoke period.

In this spoke period, i.e., a period corresponding to a predetermined angle before and after the switching of the color filter, for example, a center angle of 5° before and after the switching, i.e., 10° in total, the color image corresponding to the color of the color filter cannot exactly be projected, and each spoke period is allotted to a period to perform gradation emphasis by the complementary color of the adjoining color filters, or the white color.

(C) of FIG. 3 shows a projection sequence of field periods and spoke periods, and the image of each color component corresponding to the sequence is displayed by the micro mirror element. For example, in the spoke period between the "R" field and the "G" field, the gradation emphasis of "Ye" by the addition of the "R" and "G" colors is performed. At this time, as shown in (D) and (E) of FIG. 3, the R-LED is turned off at a central timing of the spoke period, the G-excitation LD is turned on at this timing, and additionally, the image corresponding to the color component of the yellow is displayed by the micro mirror element, whereby in this spoke period, it is possible to project the image in which the gradation of the component of the yellow as the additive color of "R" and "G".

Similarly, for example, in the spoke period between the "B" field and the "Ye" field, the gradation emphasis of the white "W" (= luminance) by an additive color of "B" is performed, because the "Ye" field itself is a display period by the additive color of "R" and "G". At this time, as shown in (D), (E) and (F) of FIG. 3, the B-LED is turned off at the central timing of the spoke period, the R-LED and the G-excitation LD are turned on at the timing, and additionally, an image corresponding to a luminance component is displayed by the micro mirror element, whereby in this spoke period, it is possible to project the image in which the gradation of the luminance component of the white "W" as the additive color of "R", "G" and "B" is emphasized.

Thus, in the projector using the controller circuit where the use of the color wheel is presupposed, it is necessary to set the color wheel to the controller circuit even when the color wheel actually is not used. Moreover, when the spoke period is effectively used, in this period, the gradation emphasis of the complementary color or the luminance by the additive color is performed.

Therefore, the projector is effective for a use application such as presentation where brightness is required for the projected image, while in a use application such as home cinema where not only the brightness but also faithful reproducibility of the color are required, the projector has the defects that the emphasis of the primary colors cannot be performed and that the spoke period cannot effectively be used.

The present invention is defined by the features of the independent claims.

The invention can be more fully understood from the following detailed description when taken in conjunction with the accompanying drawings, in which:
FIG. 1 is a block diagram showing a functional circuit constitution of a data projector of a DLP (registered trademark) system according to one embodiment of the present invention;
FIG. 2 is a timing chart showing a setting constitution of a light emission timing according to the embodiment; and
FIG. 3 is a timing chart showing a setting constitution of a light emission timing of a single plate DLP (registered trademark) system projector in which a usual semiconductor light source element is used.

Embodiments of the present invention will be explained with reference to the drawings.

Hereinafter, there will be explained one embodiment in a case where the present invention is applied to a data projector of a DLP (registered trademark) system, with reference to the drawings.

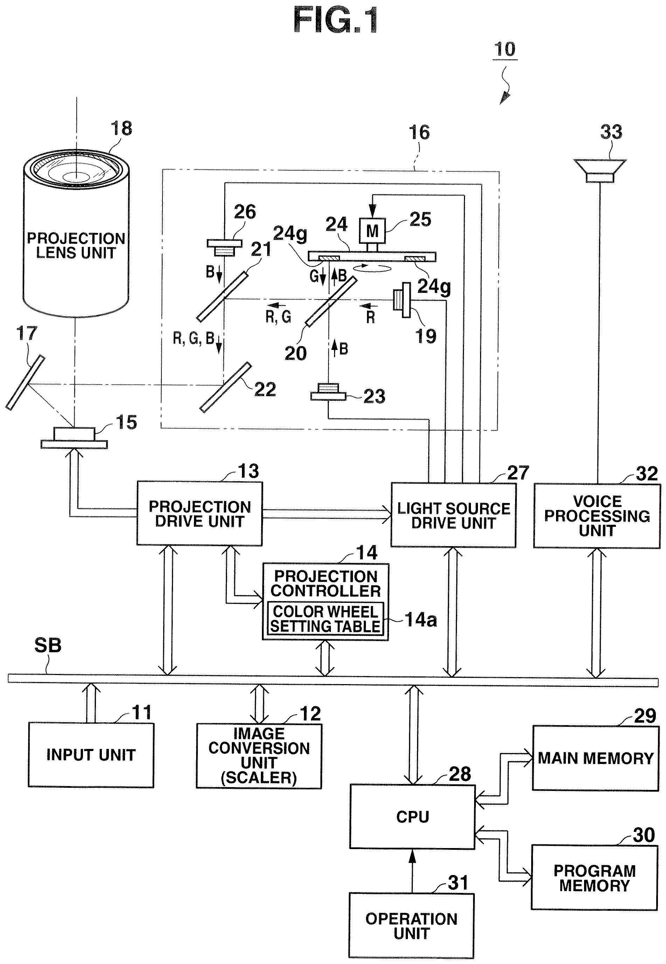

FIG. 1 is a view showing a schematic functional constitution of a data projector 10 according to the present embodiment. An input unit 11 is constituted of, for example, a pin jack (RCA) type video input terminal, a D-subl5 type RGB input terminal, a USB terminal, and a high-definition multimedia interface (HDMI) terminal. Image signals of various standards which are input into the input unit 11 are digitized in the input unit 11 as required, and then sent to an image conversion unit 12 via a system bus SB.

The image conversion unit 12 is also referred to as the scaler. The image conversion unit 12 uniformly converts input image data to the image data of a predetermined format which is suitable for projection, to send the data to a projection drive unit 13.

The projection drive unit 13 drives based on control of mainly timings by the projection controller 14. In accordance with the image data sent from the image conversion unit 12, the projection drive unit 13 drives a micro mirror element 15 which is a spatial optical modulation element to perform display, through higher-speed time sharing drive by multiplying a frame rate of the predetermined format which is, for example, 120 [frames/second], a division number of color components, and a display gradation number.

On the presupposition that the projection controller 14 uses a color wheel, the projection controller 14 beforehand sets, in a color wheel (CW) setting table 14a, respective timings of a color switch timing of each of color filters constituting the color wheel, and sets a start timing and an end timing of a spoke period (or a color transitional period) which includes the above switch timing in a center of the spoke period. On the basis of each set timing, the projection drive unit 13 controls the display drive of the micro mirror element 15 every corresponding color component.

The micro mirror element 15 individually turns on/off micro mirrors arranged in an array, for example, a wide extended graphic array (WXGA) (lateral 1280 pixels × vertical 800 pixels) at each tilt angle with the high speed to display an image, and forms an optical image by reflected light of the element,

On the other hand, a light source unit 16 cyclically emits light-source lights in a time sharing manner by emitting primary color lights of "R", "G" and "B" singly and in combination as a complementary color light. The light-source lights from the light source unit 16 are totally reflected by a mirror 17, to irradiate the micro mirror element 15 with the lights.

Then, the optical image corresponding to each color component of the light-source lights is formed by the reflected light of the micro mirror element 15, and the formed optical image is projected and displayed on a screen (not shown) as a projection object through a projection lens unit 18.

In FIG. 1, constitutional components of an optical system such as various optical lenses, mirrors and the like constituting the light source unit 16 as a real structure are simplified as much as possible, and the light source unit 16 is shown exclusively for the explanation. The light source unit 16 includes an LED 19 which emits the red light (hereinafter referred to as "R-LED 19").

The red light of "R" emitted by the R-LED 19 is transmitted through a dichroic mirror 20, reflected by a dichroic mirror 21, and then reflected by a mirror 22, to reach the mirror 17.

The light source unit 16 further includes an LD 23 which emits a blue laser light as an excitation light (hereinafter referred to as "excitation LD 23"). The blue laser light of "B" as the excitation light emitted by the excitation LD 23 is transmitted through the dichroic mirror 20, and then the peripheral surface of a fluorescence wheel 24 is irradiated with the light. The fluorescence wheel 24 is rotated by a wheel motor (M) 25, and a ring-like fluorescent layer 24g is formed over the whole peripheral surface to be irradiated with the above blue laser light.

More specifically, the circumference of the fluorescence wheel 24 to be irradiated with the laser light is coated with a fluorescent material, whereby the fluorescent layer 24g is formed. On the back surface which is opposite to the surface of the fluorescence wheel 24 on which the fluorescent layer 24g is formed, a reflecting plate (not shown) is disposed to overlap with the fluorescent layer 24g.

When the fluorescent layer 24g of the fluorescence wheel 24 is irradiated with the blue laser light as the excitation light, the green light of "G" is excited as the reflected light. This green light is reflected by the dichroic mirror 20, also reflected by the dichroic mirror 21, and then reflected by the mirror 22, to reach the mirror 17.

The light source unit 16 further includes an LED 26 which emits a blue light (hereinafter referred to as "B-LED 26"). The blue light of "B" emitted by the B-LED 26 is transmitted through the dichroic mirror 21, and reflected by the mirror 22, to reach the mirror 17.

As above, the dichroic mirror 20 transmits the blue light and the red light, while reflecting the green light. The dichroic mirror 21 transmits the blue light, while reflecting the green light and the red light. A light source drive unit 27 carries out the light emissions of the R-LED 19, the excitation LD 23 and the B-LED 26 and the rotation of the fluorescence wheel 24 by the wheel motor 25, in accordance with timing signals from the projection drive unit 13 and under the control of a CPU 28 described later.

All the above operations of the circuits are controlled by the CPU 28. The CPU 28 is directly connected to a main memory 29 and a program memory 30. The main memory 29 is constituted of, for example, an SRAM, and functions as a work memory of the CPU 28. The program memory 30 is constituted of an electrically rewritable nonvolatile memory, and stores an operation program to be executed by the CPU 28, various standard data and the like. The CPU 28 executes a control operation in the data projector 10 by use of the main memory 29 and the program memory 30.

The CPU 28 executes various projecting operations in accordance with key operation signals from an operation unit 31. The operation unit 31 includes a key operating section disposed in a main body of the data projector 10, and an infrared light receiving section which receives an infrared light from a remote controller (not shown) for exclusive use in the data projector 10. Moreover, the operation unit 31 outputs, directly to the CPU 28, the key operation signal on the basis of a key operated in the key operating section of the main body or the remote controller by a user.

The CPU 28 is further connected to a voice processing unit 32 via the system bus SB. The voice processing unit 32 includes a sound source circuit of a PCM sound source or the like, and the voice processing unit 32 converts voice data given at the projecting operation to analog data, and drives a speaker unit 33 to amplify and emit a sound, or to generate a beep sound or the like as required.

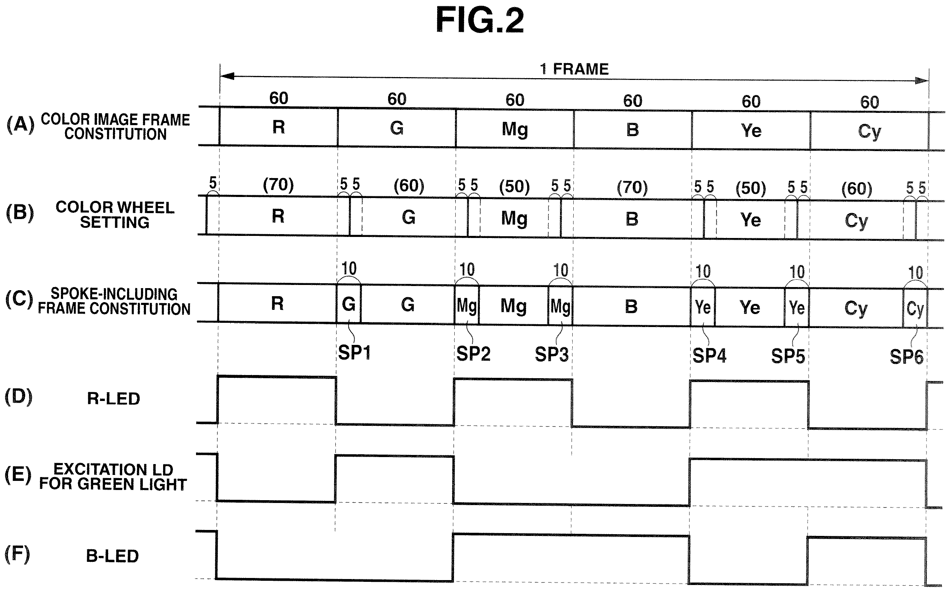

Next, an operation of the above embodiment will be explained. FIG. 2 is a timing chart showing a setting constitution of a light emission timing according to the present embodiment. As shown in (A) of FIG. 2, here, one frame of a color image is constituted of six fields in total, i.e., red "R", green "G", magenta "Mg", blue "B", yellow "Ye" and cyan "Cy".

A numeric value "60" (implying an angle of 60°) described for each field indicates that each field period is evenly divided as a center angle corresponding to a rotation angle (one cycle of 360°) of a virtual color wheel.

For the above frame constitution, the rotation timing of each color filter of the virtual color wheel is beforehand set in the color wheel setting table 14a of the projection controller 14 as shown in (B) of FIG. 2. In the projection controller 14 where the use of the color wheel is presupposed, a period in which the color filter of each color constituting the color wheel switches at a position of a transmission spot light from the light source is referred to as "spoke period" (or color switch period), and it is necessary to set the spoke period. On the basis of this setting, the projection drive unit 13 controls the display drive of the micro mirror element 15 in accordance with the light emission timing of each color component.

In the color wheel setting table 14a of the projection controller 14, the color filter switching (or color switch timing) is set to form the image corresponding to each of the color components by the display element 15. A period corresponding to a predetermined angle before and after the switching of the color filler, for example, a center angle of the color wheel which is 5° before and after the switching, i.e., 10° in total is the spoke period. In this period, the color image corresponding to the color of the color filter cannot exactly be projected, and each spoke period corresponds to a period to perform gradation emphasis by the complementary color of the adjoining color filters, or white. Additionally, needless to say, a period corresponding to an angle other than **10** degree can be set as the spoke period.

Therefore, in the present embodiment, the timings are set in the color wheel setting table 14a such that one of the start timing and the end timing of the spoke period of each color of the color filter coincides with a switch timing of the color of the light actually emitted by the light source unit 16 as shown in (A) of FIG. 2.

Specifically, it is considered that the start timing of the first "R" field protrudes as much as 5° to the "Cy" field which is the last field of the previous frame and that the end timing thereof protrudes as much as 5° to the next "G" field, and the "R" field is set, in the color wheel setting table 14a, as a period corresponding to the center angle of the color wheel which is 70° in total.

In the second "G" field, it is considered that the start timing delays as much as 5° described above and that the end timing protrudes as much as 5° to the next "Mg" field, and the "G" field is set, in the color wheel setting table 14a, as a period corresponding to the center angle of the color wheel which is 60° in total.

In the third "Mg" field, it is considered that the start timing delays as much as 5° described above and that the end timing comes as much as 5° prior to the start of the next "B" field, and the "Mg" field is set, in the color wheel setting table 14a, as a period corresponding to the center angle of the color wheel which is 50° in total.

In the fourth "B" field, it is considered that the start timing protrudes as much as 5° to the previous "Mg" field as described above and that the end timing protrudes as much as 5° to the next "Ye" field, and the "B" field is set, in the color wheel setting table 14a, as a period corresponding to the center angle of the color wheel which is 70° in total.

In the fifth "Ye" field, it is considered that the start timing delays as much as 5° described above and that the end timing comes as much as 5° prior to the start of the next "Cy" field, and the "Ye" field is set, in the color wheel setting table 14a, as a period corresponding to the center angle of the color wheel which is 50° in total.

In the last "Cy" field, it is considered that the start timing protrudes as much as 5° to the previous "Ye" field as described above and that the end timing also comes as much as 5° prior to the start of the "R" field positioned in a leading portion of the next frame, and the "Cy" field is set, in the color wheel setting table 14a, as a period corresponding to the center angle of the color wheel which is 60° in total.

Thus, the timings are beforehand set in the color wheel setting table 14a of the projection controller 14 such that one of the start timing and the end timing of each spoke period between the fields coincides with a switch timing of the color of the light actually emitted by the light source unit 16.

When the virtual color wheel is beforehand set as described above, as shown in (C) of FIG. 2, each spoke period between the fields is present on one of the previous field side and the next field side of the original field switch timing.

That is, as shown by a projection sequence of the field periods and spoke periods in (C) of FIG. 2, a first spoke period "SP1" positioned between the "R" field positioned first in the one frame and the next "G" field is positioned in a leading portion of the second "G" field at an actual projection timing.

Similarly, a second spoke period "SP2" positioned between the second "G" field and the third "Mg" field is positioned in a leading portion of the third "Mg" field at the actual projection timing.

Moreover, a third spoke period "SP3" positioned between the third "Mg" field and the fourth "B" field is positioned in an ending portion of the third "Mg" field at the actual projection timing.

Furthermore, a fourth spoke period "SP4" positioned between the fourth "B" field and the fifth "Ye" field is positioned in a leading portion of the fifth "Ye" field at the actual projection timing.

Moreover, a fifth spoke period "SP5" positioned between the fifth "Ye" field and the sixth "Cy" field is positioned in an ending portion of the fifth "Ye" field at the actual projection timing.

Furthermore, a sixth spoke period "SP6" positioned between the sixth "Cy" field and the leading "R" field of the next frame is positioned in an ending portion of the sixth "Cy" field at the actual projection timing.

Therefore, in the setting in which the image corresponding to the color component of "G" is displayed by the micro mirror element 15 in the leading first spoke period "SP1" belonging to the "G" field as shown in the drawing, the optical image corresponding to the color component of "R" can be projected by fully using a projection period of 60° in the previous "R" field, and further in the subsequent "G" field, the optical image corresponding to the color component of "G" can be projected by fully using the projection period of 60°.

Similarly, in the setting in which the image corresponding to the color component of "Mg" is displayed by the micro mirror element 15 in each of the leading second spoke period "SP2" and the ending third spoke period "SP3" both belonging to the "Mg" field as shown in the drawing, the optical image corresponding to the color component of "Mg" can be projected by fully using a projection period of 60° in the "Mg" field, and further in the subsequent "B" field, the optical image corresponding to the color component of "B" can be projected by fully using the projection period of 60°.

Similarly, in the setting in which the image corresponding to the color component of "Ye" is displayed by the micro mirror element 15 in each of the leading fourth spoke period "SP4" and the ending fifth spoke period "SP5" both belonging to the "Ye" field as shown in the drawing, the optical image corresponding to the color component of Ye can be projected by fully using a projection period of 60° in the "Ye" field.

Moreover, also in the subsequent last "Cy" field, the optical image corresponding to the color component of "Cy" can be projected by fully using a projection period of 60° in the "Cy" field, in the setting in which the image corresponding to the color component of "Cy" is displayed by the micro mirror element 15 in the sixth spoke period "SP6" positioned in the ending portion of the field.

As above, in consequence, it is possible to project the optical image of each color component in the full gradation by fully using each field period constituting the color image, without taking any spoke periods into consideration.

In actual, also in the light source unit 16 driven to emit the light by the light source drive unit 27, the R-LED 19 which emits the red light of "R", the excitation LD 23 which emits the blue light for the excitation of the green light of "G" and the B-LED 26 which emits the blue light of "B" are driven to be on and off synchronously with the switch timing of the frame constitution shown in (A) of FIG. 2, as shown in (D), (E) and (F) of FIG. 2. Therefore, use as the light-source lights including a primary color light by the single color or a complementary color light obtained by mixing two color lights using an additive light is possible, and it is not necessary to perform light emission drive or the like in a partially repeated manner between the adjacent fields in consideration of the spoke period, which further facilitates the control sequence.

According to the present embodiment described above in detail, it is possible to project the image in which the expressive power of color is enhanced.

Additionally, in the above embodiment, the field periods of the primary colors, in which each of the primary colors of "R", "G" and "B" is emitted singly, are included, and hence it is possible to securely enhance the expressive power especially in a projection mode for use in a home theater or the like in which the expressive power of chroma is more required than brightness.

Further in the above embodiment, as indicated by, for example, the above connections between the "G" field and the "Mg" field and between the "Mg" field and the "B" field, especially the primary color field to emit each primary color light singly and the field to obtain the complementary color light by adding up the primary color lights are included to essentially invalidate the presence of each spoke period. Therefore, the expressive power of each of colors such as the primary colors and the complementary color is enhanced, whereby it is possible to project the image in which the color and the brightness are compatible with each other.

Similarly in the above embodiment, as indicated by, for example, the above connection between the "Ye" field and the "Cy" field, especially the field to obtain the complementary color light by adding up the primary color lights and a field to emit another complementary color light are included to essentially invalidate the presence of the spoke period. Therefore, the expressive power of the complementary color is enhanced, whereby it is possible to project a brighter image.

Further in the above embodiment, as indicated by, for example, the above connection between the "R" field and the "G" field, especially the field to emit the primary color light singly and another primary color field are included to essentially invalidate the presence of the spoke period. Therefore, the expressive power of the primary color is enhanced, whereby it is possible to project a more colorful image.

Additionally in the above embodiment, in the light source unit 16, the fluorescence wheel 24 provided with the ring-like fluorescent layer 24g is rotated and driven by the wheel motor 25, and the blue light as the excitation light is emitted by the excitation LD 23 to obtain the green light by the reflected light of the LD.

Thus, according to the constitution in which the single color is generated by using the rotating wheel provided with the fluorescent layer in the whole peripheral surface thereof, it is possible to use part of the circuits of power source control for rotating the wheel, and the like, in the circuit constitution provided with the projection controller 14 where the use of the color wheel is presupposed.

Additionally, although not explained in the above embodiment, the constitution of the B-LED 26 in the light source unit 16 is omitted, the fluorescent layer 24g is not formed but a transmission portion to transmit the blue light is formed in part of the peripheral surface of the fluorescence wheel 24, and the transmitted blue light is used directly as the light-source light. This constitution can be considered as a constitution in which the number of the components of the semiconductor light emission element constituting the light source unit 16 is further decreased.

When such a light source unit constitution is employed, there arises the necessity of controlling the rotation angle of the fluorescence wheel 24 synchronously with the frame. Therefore, in the circuit constitution provided with the projection controller 14 where the use of the color wheel is presupposed, it is possible to use both part of the circuits of the power source control for rotating the wheel, and the like, and part of the circuits for the control of the rotation angle of the color wheel.

Moreover, in the above embodiment, it has been described that all the six fields constituting the one frame of the color image have the same period of time (the center angle of the virtual color wheel) as shown in (A) of FIG. 2. However, the present invention is not limited to this embodiment, and needless to say, any setting is possible such that a length of each field period (the center angle of the virtual color wheel) varies for a design reason.

Further in the present embodiment, it has been described that the light source unit 16 includes the R-LED 19 which emits the red light, the excitation LD 23 which emits the blue light as the excitation light to excite the green light, and the B-LED 26 which emits the blue light. However, the present invention is not limited to this embodiment, and there is similarly considered a constitution using a semiconductor light emission element or the like in which the additive color of the primary colors is not used but the complementary color light is emitted directly in the single color.

## Claims

1. A projector (10) comprising
a light source unit (16) comprising at least two semiconductor light emission elements (19, 23, 26), wherein the light source unit (16) is adapted to cyclically emit a plurality of lights, each having a different color component, and wherein the color components are switched according to a light source switch timing;
a display element (15) adapted:
- to display, for each color component, a color field of a plurality of color fields corresponding to the color component, and
- to form, for each color component, an optical image corresponding to the color component,
wherein the plurality of color fields constitute one frame of a color image;
a projection unit (17, 18) adapted to project the optical images corresponding to the color components toward a projection object;
a projection controller (14) adapted to set:
- a spoke period of a color wheel, wherein the spoke period has a start timing and an end timing,
- a color filter switch timing of the color wheel, wherein the color filter switch timing occurs half-way through the spoke period, and
- one of the start timing and the end timing of the spoke period to coincide with the light source switch timing; and
a projection drive unit (13) adapted to control the display element (15) based on
- the color filter switch timing of the color wheel,
- the start timing of the spoke period, and
- the end timing of the spoke period,
such that, when the projection unit (17, 18) switches between a primary color field and a complementary color field, the corresponding spoke period of the color wheel is positioned entirely in the complementary field.

2. The projector according to claim 1, wherein
a light emission period of the light source unit (16) includes a period in which a light having only a primary color component is emitted.

3. The projector according to claim 1, wherein
a light emission period of the light source unit (16) includes a period in which a light having a primary color component is switched to a light having complementary color component.

4. The projector according to claim 1, wherein
a light emission period of the light source unit (16) includes a period in which a light having a complementary color component is switched to a light having another complementary color component.

5. The projector according to claim 1, wherein
a light emission period of the light source unit (16) includes a period in which a light having a primary color component is switched to a light having another primary color component.

6. The projector according to claim 1,
wherein the light source unit (16) includes an excitation semiconductor light emission element (23) adapted to emit an excitation light, and a rotating wheel (24) in which fluorescent layer is formed on a whole peripheral surface thereof, and
wherein at least one of the lights emitted by the light source unit (16) is a fluorescence light realized as a reflected light or a transmitted light and obtained by irradiating the peripheral surface of the rotating wheel (24) with the excitation light emitted by the excitation semiconductor light emission element (23).

7. The projector according to claim 1,
wherein the light source unit (16) includes a semiconductor light emission element (23) and a rotating wheel (24) in which a fluorescent layer is formed on part of a peripheral surface thereof, and
wherein at least two of the lights emitted by the light source unit (16) are an unconverted light and a fluorescence light, each realized as a reflected light or a transmitted light and obtained by irradiating the peripheral surface of the rotating wheel (24) with light emitted by the semiconductor light emission element (23).

8. A projection control method for use in a projector (10) including
cyclically emitting, by a light source unit (16), a plurality of lights, each having a different color component, each having a different color component,
wherein the light source unit (16) comprises at least two semiconductor light emission elements (19, 23, 26), and
wherein the color components are switched according to a light source switch timing;
displaying, by a display element (15) and for each color component, a color field corresponding to the color component; and
forming, by the display element (15) and for each color component, an optical image corresponding to the color component;
projecting, by a projection unit (17, 18), the optical images corresponding to the color components toward a projection object;
setting, by a projection controller (14),
- a spoke period of a color wheel, wherein the spoke period has a start timing and an end timing, and
- a color filter switch timing of the color wheel, wherein the color filter switch timing occurs half-way through the spoke period;
- one of the start timing and the end timing of the spoke period to coincide with the light source switch timing; and
controlling, by a projection drive unit (13), the display element (15) based on
- the color filter switch timing of the color wheel,
- the start timing of the spoke period, and
- the end timing of the spoke period,
such that, when the projection unit (17, 18) switches between a primary color field and a complementary color field, the corresponding spoke period of the color wheel is positioned entirely in the complementary field.

9. The projection control method according to claim 8, wherein
a light emission period of the light source unit (16) includes a period in which a light having only a primary color component is emitted.

10. The projection control method according to claim 8, wherein
a light emission period of the light source unit (16) includes a period in which a light having a primary color component is switched to a light having a complementary color component.

11. The projection control method according to claim 8, wherein
a light emission period of the light source unit (16) includes a period in which a light having a complementary color component is switched to a light having another complementary color component.

12. The projection control method according to claim 8, wherein
a light emission period of the light source unit (16) includes a period in which a light having a primary color component is switched to a light having another primary color component.

13. A recording medium storing a computer-readable program comprising computer program code means adapted to cause the projector (10) of claim 1 to execute the steps of the method of any of claims 8 to 12.

## Patentansprüche

1. Projektor (10), der umfasst:
eine Lichtquellen-Einheit (16), die wenigstens zwei Halbleiter-Lichtemissionselemente (19, 23, 26) umfasst, wobei die Lichtquellen-Einheit (16) so eingerichtet ist, dass sie zyklisch eine Vielzahl von Lichtem emittiert, die jeweils eine andere Farbkomponente aufweisen, und die Farbkomponenten entsprechend einem Lichtquellen-Schaltzeit-punkt geschaltet werden;
ein Anzeigeelement (15), das so eingerichtet ist, dass es:
- für jede Farbkomponente ein Farbfeld aus einer Vielzahl von Farbfeldern anzeigt, das der Farbkomponente entspricht, und
- für jede Farbkomponente ein optisches Bild erzeugt, das der Farbkomponente entspricht,
wobei die Vielzahl von Farbfeldern ein Einzelbild eines Farbbildes bilden;
eine Projektions-Einheit (17, 18), die so eingerichtet ist, dass sie die optischen Bilder, die den Farbkomponenten entsprechen, in Richtung eines Projektions-Objektes projiziert;
eine Projektions-Steuerungseinrichtung (14), die so eingerichtet ist, dass sie einstellt:
- eine Speichen-Periode eines Farbrades, wobei die Speichen-Periode einen Anfangs-Zeitpunkt und einen End-Zeitpunkt hat,
- einen Farbfilter-Schaltzeitpunkt des Farbrades, wobei der Farbfilter-Schaltzeitpunkt in der Mitte der Speichen-Periode auftritt, und
- einer von dem Anfangs-Zeitpunkt und dem End-Zeitpunkt der Speichen-Periode mit dem Schaltzeitpunkt der Lichtquelle zusammenfällt; und
eine Projektionsansteuerungs-Einheit (13), die so eingerichtet ist, dass sie das Anzeigeelement (15) auf Basis
- des Farbfilter-Schaltzeitpunktes des Farbrades,
- des Anfangs-Zeitpunktes der Speichen-Periode sowie
- des End-Zeitpunktes der Speichen-Periode
so steuert dass, wenn die Projektions-Einheit (17, 18) zwischen einem Primärfarben-Feld und einem Komplementärfarben-Feld umschaltet, die entsprechende Speichen-Periode des Farbrades vollständig in dem Komplementär-Feld positioniert wird.

2. Projektor nach Anspruch 1, wobei
eine Lichtemissions-Periode der Lichtquellen-Einheit (16) eine Periode einschließt, in der ein Licht mit nur einer Primärfarben-Komponente emittiert wird.

3. Projektor nach Anspruch 1, wobei
eine Lichtemissions-Periode der Lichtquellen-Einheit (16) eine Periode einschließt, in der ein Licht mit einer Primärfarben-Komponente zu einem Licht mit einer Komplementärfarben-Komponente umgeschaltet wird.

4. Projektor nach Anspruch 1, wobei
eine Lichtemissions-Periode der Lichtquellen-Einheit (16) eine Periode einschließt, in der ein Licht mit einer Komplementärfarben-Komponente zu einem Licht mit einer anderen Komplementärfarben-Komponente umgeschaltet wird.

5. Projektor nach Anspruch 1, wobei
eine Lichtemissions-Periode der Lichtquellen-Einheit (16) eine Periode einschließt, in der ein Licht mit einer Primärfarben-Komponente zu einem Licht mit einer anderen Primärfarben-Komponente umgeschaltet wird.

6. Projektor nach Anspruch 1,
wobei die Lichtquellen-Einheit (16) ein Anregungs-Halbleiter-Lichtemissionselement (23), das so eingerichtet ist, dass es ein Anregungs-Licht emittiert, sowie ein rotierendes Rad (24) enthält, an dem eine fluoreszierende Schicht auf einer gesamten Umfangsfläche desselben ausgebildet ist, und
wobei wenigstens eines der von der Lichtquellen-Einheit (16) emittierten Lichter ein Fluoreszenz-Licht ist, das als ein reflektiertes Licht oder ein durchgelassenes Licht ausgeführt ist und entsteht, indem die Umfangsfläche des rotierenden Rades (24) mit dem von dem Anregungs-Halbleiter-Lichtemissionselement (23) emittierten Anregungs-Licht bestrahlt wird.

7. Projektor nach Anspruch 1,
wobei die Lichtquellen-Einheit (16) ein Halbleiter-Lichtemissionselement (23) und ein rotierendes Rad (24) enthält, an dem eine fluoreszierende Schicht auf einem Teil einer Umfangsfläche desselben ausgebildet ist, und
wobei wenigstens zwei der von der Lichtquellen-Einheit (16) emittierten Lichter ein unverändertes Licht und ein Fluoreszenz-Licht sind, die jeweils als ein reflektiertes Licht oder ein durchgelassenes Licht ausgeführt sind und entstehen, indem die Umfangsfläche des rotierenden Rades (24) mit dem von dem Halbleiter-Lichtemissionselement (23) emittierten Licht bestrahlt wird.

8. Projektions-Steuerungsverfahren zum Einsatz in einem Projektor (10), das einschließt:
zyklisches Emittieren einer Vielzahl von Lichtern, die jeweils eine andere Farbkomponente aufweisen, durch eine Lichtquellen-Einheit (16),
wobei die Lichtquellen-Einheit (16) wenigstens zwei Halbleiter-Lichtemissionselemente (19, 23, 26) umfasst, und
die Farbkomponenten entsprechend einem Lichtquellen-Schaltzeitpunkt geschaltet werden;
Anzeigen eines der Farbkomponente entsprechenden Farbfeldes für jede Farbkomponente durch ein Anzeigeelement (15); sowie
Erzeugen eines der Farbkomponente entsprechenden optischen Bildes für jede Farbkomponente durch das Anzeigeelement (15);
Projizieren der den Farbkomponenten entsprechenden optischen Bilder in Richtung eines Projektions-Objektes durch eine Projektions-Einheit (17, 18);
Einstellen durch eine Projektions-Steuerungseinrichtung (14)
- einer Speichen-Periode eines Farbrades, wobei die Speichen-Periode einen Anfangs-Zeitpunkt und einen End-Zeitpunkt hat, sowie
- eines Farbfilter-Schaltzeitpunktes des Farbrades, wobei der Farbfilter-Schaltzeitpunkt in der Mitte der Speichen-Periode auftritt;
- einer von dem Anfangs-Zeitpunkt und dem End-Zeitpunkt der Speichen-Periode mit dem Schaltzeitpunkt der Lichtquelle zusammenfällt; und
Steuern des Anzeigeelementes (15) durch eine Projektionsansteuerungs-Einheit (13) auf Basis
- des Farbfilter-Schaltzeitpunktes des Farbrades,
- des Anfangs-Zeitpunktes der Speichen-Periode sowie
- des End-Zeitpunktes der Speichen-Periode
so dass, wenn die Projektions-Einheit (17, 18) zwischen einem Primärfarben-Feld und einem Komplementärfarben-Feld umschaltet, die entsprechende Speichen-Periode des Farbrades vollständig in dem Komplementär-Feld positioniert wird.

9. Projektions-Steuerungsverfahren nach Anspruch 8, wobei
eine Lichtemissions-Periode der Lichtquellen-Einheit (16) eine Periode einschließt, in der ein Licht mit nur einer Primärfarben-Komponente emittiert wird.

10. Projektions-Steuerungsverfahren nach Anspruch 8, wobei
eine Lichtemissions-Periode der Lichtquellen-Einheit (16) eine Periode einschließt, in der ein Licht mit einer Primärfarben-Komponente zu einem Licht mit einer Komplementärfarben-Komponente umgeschaltet wird.

11. Projektions-Steuerungsverfahren nach Anspruch 8, wobei
eine Lichtemissions-Periode der Lichtquellen-Einheit (16) eine Periode einschließt, in der ein Licht mit einer Komplementärfarben-Komponente zu einem Licht mit einer anderen Komplementärfarben-Komponente umgeschaltet wird.

12. Projektions-Steuerungsverfahren nach Anspruch 8, wobei
eine Lichtemissions-Periode der Lichtquellen-Einheit (16) eine Periode einschließt, in der ein Licht mit einer Primärfarben-Komponente zu einem Licht mit einer anderen Primärfarben-Komponente umgeschaltet wird.

13. Aufzeichnungsmedium, das ein computerlesbares Programm speichert, das Computerprogramm-Codemittel umfasst, die so eingerichtet sind dass sie den Projektor (10) nach Anspruch 1 veranlassen, die Schritte des Verfahrens nach einem der Ansprüche 8 bis 12 auszuführen.

## Revendications

1. Projecteur (10) comprenant
une unité de source lumineuse (16) comprenant au moins deux éléments semi-conducteurs d'émission de lumière (19, 23, 26), dans lequel l'unité de source lumineuse (16) est adaptée pour émettre cycliquement une pluralité de lumières ayant chacune une composante de couleur différente, et dans lequel les composantes de couleur sont commutées conformément à un temps de commutation de source lumineuse ;
un élément d'affichage (15) adapté :
- pour afficher, pour chaque composante de couleur, un champ de couleur d'une pluralité de champs de couleur correspondant à la composante de couleur, et
- pour former, pour chaque composante de couleur, une image optique correspondant à la composante de couleur, dans lequel la pluralité de champs de couleur constitue une trame d'une image en couleur ;
une unité de projection (17, 18) adaptée pour projeter les images optiques correspondant aux composantes de couleur vers un objet de projection ;
un contrôleur de projection (14) adapté pour régler :
- une période de rayon d'un cercle chromatique, dans lequel la période de rayon a un temps de début et un temps de fin,
- un temps de commutation de filtre de couleur du cercle chromatique, dans lequel le temps de commutation de filtre de couleur se produit à mi-chemin de la période de rayon, et
- un temps parmi le temps de début et le temps de fin de la période de rayon pour coïncider avec le temps de commutation de la source lumineuse ; et
une unité de commande de projection (13) adaptée pour contrôler l'élément d'affichage (15) sur base
- du temps de commutation de filtre de couleur du cercle chromatique,
- du temps de début de la période de rayon, et
- du temps de fin de la période de rayon,
de telle sorte que, quand l'unité de projection (17, 18) commute entre un champ de couleur primaire et un champ de couleur complémentaire, la période de rayon correspondante du cercle chromatique est positionnée entièrement dans le champ complémentaire.

2. Projecteur selon la revendication 1, dans lequel
une période d'émission de lumière de l'unité de source lumineuse (16) comprend une période dans laquelle une lumière ayant uniquement une composante de couleur primaire est émise.

3. Projecteur selon la revendication 1, dans lequel
une période d'émission de lumière de l'unité de source lumineuse (16) comprend une période dans laquelle une lumière ayant une composante de couleur primaire est commutée à une lumière ayant une composante de couleur complémentaire.

4. Projecteur selon la revendication 1, dans lequel
une période d'émission de lumière de l'unité de source lumineuse (16) comprend une période dans laquelle une lumière ayant une composante de couleur complémentaire est commutée à une lumière ayant une autre composante de couleur complémentaire.

5. Projecteur selon la revendication 1, dans lequel
une période d'émission de lumière de l'unité de source lumineuse (16) comprend une période dans laquelle une lumière ayant une composante de couleur primaire est commutée à une lumière ayant une autre composante de couleur primaire.

6. Projecteur selon la revendication 1,
dans lequel l'unité de source lumineuse (16) comprend un élément semi-conducteur d'émission de lumière d'excitation (23) adapté pour émettre une lumière d'excitation, une roue rotative (24) dans laquelle une couche fluorescente est formée sur l'entièreté d'une surface périphérique de la roue, et
dans lequel au moins une des lumières émises par l'unité de source lumineuse (16) est une lumière fluorescente réalisée comme une lumière réfléchie ou une lumière transmise et obtenue par l'irradiation de la surface périphérique de la roue rotative (24) avec la lumière d'excitation émise par l'élément semi-conducteur d'émission de lumière d'excitation (23).

7. Projecteur selon la revendication 1,
dans lequel l'unité de source lumineuse (16) comprend un élément semi-conducteur d'émission de lumière (23) et une roue rotative (24) dans laquelle une couche fluorescente est formée sur une partie d'une surface périphérique de la roue, et
dans lequel au moins deux des lumières émises par l'unité de source lumineuse (16) sont une lumière non convertie et une lumière fluorescente, réalisées chacune comme de la lumière réfléchie ou de la lumière transmise, et obtenues par l'irradiation de la surface périphérique de la roue rotative (24) avec de la lumière émise par l'élément semi-conducteur d'émission de lumière (23).

8. Procédé de contrôle de projection destiné à être utilisé dans un projecteur (10), comprenant
l'émission cyclique, par une unité de source lumineuse (16), d'une pluralité de lumières ayant chacune une composante de couleur différente,
dans lequel l'unité de source lumineuse (16) comprend au moins deux éléments semi-conducteurs d'émission de lumière (19, 23, 26), et
dans lequel les composantes de couleur sont commutées conformément à un temps de commutation de source lumineuse ;
l'affichage, par un élément d'affichage (15) et pour chaque composante de couleur, d'un champ de couleur correspondant à la composante de couleur ; et
la formation, par l'élément d'affichage (15) et pour chaque composante de couleur, d'une image optique correspondant à la composante de couleur ;
la projection, par une unité de projection (17, 18), des images optiques correspondant aux composantes de couleur vers un objet de projection ;
le réglage, par un contrôleur de projection (14),
- d'une période de rayon d'un cercle chromatique, dans lequel la période de rayon a un temps de début et un temps de fin, et
- d'un temps de commutation de filtre de couleur du cercle chromatique, dans lequel le temps de commutation de filtre de couleur se produit à mi-chemin de la période de rayon ;
- d'un temps parmi le temps de début et le temps de fin de la période de rayon pour coïncider avec le temps de commutation de la source lumineuse ; et
le contrôle, par une unité de commande de projection (13), de l'élément d'affichage (15) sur base
- du temps de commutation de filtre de couleur du cercle chromatique,
- du temps de début de la période de rayon, et
- du temps de fin de la période de rayon,
de telle sorte que, quand l'unité de projection (17, 18) commute entre un champ de couleur primaire et un champ de couleur complémentaire, la période de rayon correspondante du cercle chromatique est positionnée entièrement dans le champ complémentaire.

9. Procédé de contrôle de projection selon la revendication 8, dans lequel
une période d'émission de lumière de l'unité de source lumineuse (16) comprend une période dans laquelle une lumière ayant uniquement une composante de couleur primaire est émise.

10. Procédé de contrôle de projection selon la revendication 8, dans lequel
une période d'émission de lumière de l'unité de source lumineuse (16) comprend une période dans laquelle une lumière ayant une composante de couleur primaire est commutée à une lumière ayant une composante de couleur complémentaire.

11. Procédé de contrôle de projection selon la revendication 8, dans lequel
une période d'émission de lumière de l'unité de source lumineuse (16) comprend une période dans laquelle une lumière ayant une composante de couleur complémentaire est commutée à une lumière ayant une autre composante de couleur complémentaire.

12. Procédé de contrôle de projection selon la revendication 8, dans lequel
une période d'émission de lumière de l'unité de source lumineuse (16) comprend une période dans laquelle une lumière ayant une composante de couleur primaire est commutée à une lumière ayant une autre composante de couleur primaire.

13. Support d'enregistrement sur lequel est stocké un programme lisible par un ordinateur comprenant un moyen à code de programme informatique pour commander au projecteur (10) selon la revendication 1 d'exécuter les étapes du procédé selon l'une quelconque des revendications 8 à 12.
